Europäisches Patentamt

European Patent Office

Office européen des brevets

(19)

(11) Veröffentlichungsnummer : **0 158 590**
**B1**

(12) **EUROPÄISCHE PATENTSCHRIFT**

(45) Veröffentlichungstag der Patentschrift :
25.05.88

(51) Int. Cl.⁴ : **A 21 D 10/02, B 65 D 85/672**

(21) Anmeldenummer : 85810055.5

(22) Anmeldetag : 12.02.85

(54) Gebrauchsfertiger, ausgewalter Teig.

(30) Priorität : 23.03.84 CH 1487/84
12.07.84 DE 8420936 U

(43) Veröffentlichungstag der Anmeldung :
16.10.85 Patentblatt 85/42

(45) Bekanntmachung des Hinweises auf die Patenterteilung : 25.05.88 Patentblatt 88/21

(84) Benannte Vertragsstaaten :
AT BE CH DE FR GB IT LI LU NL SE

(56) Entgegenhaltungen :
WO-A-84 /040 81
FR-A- 2 184 140
US-A- 2 726 156
US-A- 2 784 103
US-A- 3 051 583
US-A- 3 338 722
US-A- 3 694 224
US-A- 4 049 836

(73) Patentinhaber : Thomi + Franck AG
Horburgstrasse 105
CH-4057 Basel (CH)

(72) Erfinder : Errass, Werner, Dr.
Römerstrasse 14
CH-4148 Pfeffingen (CH)

(74) Vertreter : Becher, Pauline, Dr. et al
A. Braun, Braun, Héritier, Eschmann AG Holbeinstrasse 36-38
CH-4051 Basel (CH)

EP 0 158 590 B1

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

## Beschreibung

Sowohl im Haushalt als auch bei Grossverbrauchern macht das gleichmässige Auswallen von Teigen, wie Kuchenteig, Mürbeteig, Blätterteig oder Pizzateig, Schwierigkeiten. Wenn man nicht über eine Ausrollmaschine verfügt, ist es praktisch unmöglich, eine gleichmässige Dicke des Teiges zu erzielen. Es besteht daher Bedarf für einen ausgewallten, gebrauchsfertigen Teig. Für den Kleinverbraucher wäre es zudem besonders günstig, wenn der Teig für eine runde oder rechteckige Kuchenform passend ausgebildet wäre, so dass keine Teigverluste eintreten. Derartige Produkte waren bisher im Handel nicht erhältlich. Dies ist offenbar u. a. darauf zurückzuführen, dass es an einer geeigneten Packung fehlt, weil die labile und grossflächige Form eines ausgewallten Teiges das Verpacken erschwert. Ausserdem neigt der Teig bei einer Formveränderung, beispeilsweise durch Falten, zum Aneinanderkleben und Brüchigwerden, so dass er nicht unbeschädigt in seine ursprüngliche Form zurückgeführt werden kann.

Die US-A-2 726 156 beansprucht ein Verfahren zur Herstellung eines Pastetenkrustenteiges mit einer ganz bestimmten Zusammensetzung, der in ganz bestimmter Weise ausgewallt wird und nach Anspruch 2 auf sich selbst zu einem Zylinder aufgerollt, tiefgefroren und verpackt wird, sowie einen verpackten, tiefgefrorenen Pastetenkrustenteig, der zusammen mit einem flexiblen Flächengebilde aus Einwickelmaterial zu einem Zylinder aufgerollt ist. Es handelt sich also nicht um einen gebrauchsfertigen Teig. Bei der Entwicklung dieses Produktes waren, wie in Spalte 1, Zeilen 53 bis 62 der US-A-2 726 156 angegeben, grosse Schwierigkeiten bei der Handhabung des Teiges vor dem Gefrieren, bei dem Transport als Handelsprodukt und ganz besonders bei der Handhabung nach dem Auftauen zu überwinden. Das Problem, das bei der Verwendung eines solchen Teiges auftritt, besteht in dem sachgemässen Auftauen in der Weise, dass der aufgetaute Teig ohne Beschädigung (Brechen, Reissen usw.) auseinandergefaltet bzw. auseinandergewickelt werden kann ; es ist, besonders im Haushalt, nur schwer zu lösen, so dass sich derartige tiefgefrorene Produkte zumindest im Haushalt nicht durchgesetzt haben.

Diese Schwierigkeiten sind grundsätzlich verschieden von den Schwierigkeiten, die bei der Verwendung eines mit einer Trennfolie zu einer zylinderförmigen Rolle aufgerollten Frischteiges auftreten, nämlich bakteriologische Probleme und das Zusammenkleben des Teiges mit der Trennfolie, das besonders bei kleinen Teigformaten im Haushalt schwer zu vermeiden ist. Daher kann eine Lösung des Problems, das bei tiefgefrorenen Teigen auftritt, nicht ohne weiteres auf Frischteige übertragen werden.

Die vorliegende Erfindung bezweckt, der Hausfrau ebenso wie den Grossverbrauchern einen gebrauchsfertigen oder Frischteig in ausgewalltem Zustand zur Verfügung zu stellen, der ohne Tiefkühlung haltbar ist und problemlos, das heisst, ohne Brechen, Reissen, Zerbröckeln, Zusammenkleben usw., auf ein Backblech gebracht werden kann.

Es ist erstaunlich, dass die US-A-2 726 156, die bereits im Dezember 1955 patentiert wurde, sich prinzipiell mit tiefgefrorenem Teig befasst, und zwar schon in einer Zeit, in der Tiefkühlgeräte, speziell im Haushalt, noch bei weitem nicht so verbreitet waren wie heute. Dies ist ein Anzeichen dafür, dass der Lösung der oben skizzierten Aufgabe der Erfindung Hindernisse, unter anderem Vorurteile der Fachleute, entgegenstanden, die keineswegs leicht zu überwinden waren.

Erfindungsgemäss wird die oben angegebene Aufgabe dadurch gelöst, dass das flexible Einwickelmaterial, das in der US-A-2 726 156 verwendet wird, durch ein Backpapier ersetzt wird.

Trotzdem Backpapier (Backtrennpapier) schon lange im Handel war, ist bis zur Entwicklung der vorliegenden Erfindung niemand auf den Gedanken gekommen, einen ausgewallten Frischteig mit Hilfe von Backpapier zu einer Rolle aufzuwickeln und in diesem Zustand ohne Tiefkühlung zu verkaufen. In Skandinavien war spätestens ab 1965 Backpapier für die gewerbliche Herstellung von Backwaren und auch für den privaten Verbrauch im Handel. Vorher verwendete man zum Belegen von Backblechen Pergamentpapier, das vor Gebrauch angenässt wurde. Eine finnische Firma hat als erste ein beidseitig mit Silikon beschichtetes und bis ca. 250 °C hitzebeständiges Backpapier geliefert. Ab 1968 konnte man in der Schweiz Backpapier im Detailhandel kaufen, ab 1970 in Form von Bogen.

Dass die Verwendung von Backpapier nicht eher vorgeschlagen wurde, ist darauf zurückzuführen, dass die Entwicklung der Technik dahin ging, entweder nicht ausgewallte oder aber tiefgekühlte ausgewallte Teige in den Handel zu bringen, bei denen kein Trennmaterial verwendet wird. Dieser Trend ergibt sich aus der Tatsache, dass die Haltbarkeit von Teigen umso schlechter ist, je grösser ihre Oberfläche ist. Jeder Teig weist nämlich eine gewisse Menge Keime auf, und wenn diese auf einer grossen Oberfläche verteilt sind, ist die Wahrscheinlichkeit grösser, dass einer dieser Keime günstige Wachstumsbedingungen findet.

Die Verwendung von Backpapier als Trennpapier hat gegenüber der US-A-2 726 156 folgende Vorteile :

a) Der gebrauchsfertige und ausgewallte Frischteig braucht vor dem Backen nicht von einem « Einwickelmaterial » abgelöst zu werden, so dass keine Beschädigung des Teiges zu befürchten ist ; vielmehr kann der Teig zusammen mit dem Backpapier auf ein Backblech gelegt und sofort gebacken werden.

b) Wenn der Teig vor dem Backen mit Früchten, Zwiebeln oder dergleichen belegt wird, werden bekanntlich Löcher in den Teig gestochen, durch die der Saft ohne Verwendung von Backpapier auf das

2

Backblech laufen und dieses verschmutzen würde. Das kann durch die erfindungsgemässe Verwendung von Backpapier vermieden werden.

c) Bei Verwendung von Backpapier nimmt dieses etwas Wasser aus der Teigoberfläche auf, die deshalb trockener ist, wodurch die Haltbarkeit des Teiges verbessert wird.

Die Erfindung bezieht sich auf einen gebrauchsfertigen, ausgewallten Teig, der zusammen mit einem flexiblen Flächengebilde aus Einwickelmaterial zu einem Zylinder aufgerollt ist. Dieser Teig ist dadurch gekennzeichnet, dass sich auf mindestens einer Seite des Teiges ein Backpapier befindet und dass der Teig zusammen mit dem Backpapier zu einer mindestens annähernd zylinderförmigen Rolle aufgerollt ist. Dadurch ist gewährleistet, dass nahe aneinander liegende Abschnitte des Teiges nicht miteinander in Berührung kommen und deshalb auch nicht zusammenkleben können. Es ist ferner aus den oben angegebenen Gründen vorteilhaft, dass der Teig nicht gefaltet wird, so dass er in keiner Weise beschädigt wird. Zum Gebrauch kann der Teig einfach auseinandergerollt und in seiner ursprünglichen Form benützt werden. Das Backpapier schützt den Teig nicht nur vor dem Zusammenkleben, sondern stützt ihn auch zusätzlich. Es nimmt ferner, wie bereits erwähnt, Feuchtigkeit auf und reguliert dadurch den Feuchtigkeitshaushalt.

Der Teig kann zusammen mit dem Backpapier ohne Zuhilfenahme eines Trägers auf sich selbst aufgerollt werden. Eine verstärkte Stützwirkung kann jedoch dadurch erzielt werden, dass der Teig zusammen mit dem Backpapier auf einen zylinderförmigen Träger, vorzugsweise einen Kartonzylinder, der mit einem für den direkten Kontakt mit Lebensmitteln zugelassenen Kunststoff überzogen ist, oder einen Zylinder aus einem für den direkten Kontakt mit Lebensmitteln zugelassenen Kunststoff, vorzugsweise Polyethylen oder Polypropylen, aufgerollt wird. Ein solcher Kunststoffzylinder wird vorzugsweise mit dem Backpapier durch Verkleben oder Verschweissen (Hot Melt) fest verbunden. Diese Ausführungsform eignet sich naturgemäss vor allem für Teige mit grösseren Abmessungen, insbesondere längere Teigbahnen. Es ist von Vorteil, wenn der Träger wasserabweisend ist, so dass er keine Feuchtigkeit aus dem Teig aufnehmen und dadurch weich werden kann.

Der Teig kann z. B. ein Kuchenteig, Blätterteig, Mürbeteig oder Pizzateig sein. Folgender Gehalt an den Hauptkomponenten ist besonders vorteilhaft :

| Komponente | Breiter Bereich (Gew.-%) | Besonders bevorzugter Bereich für Kuchen- bzw. Blätterteig (Gew.-%) |
|---|---|---|
| Wasser | 5 bis 25 | 20 bis 24 |
| Fett (100%-ig) | 15 bis 35 | 26 bis 29 |
| Mehl | 35 bis 60 | 47 bis 50 |
| Salz | 0,5 bis 2,5 | 1 bis 2 |

Ausserdem enthält der Teig zweckmässig bis zu 0,2 Gew. - %, vorzugsweise bis zu 0,06 Gew. - %, mindestens eines Konservierungsmittels, wie Propionsäure und/oder Sorbinsäure und/oder deren Salze. Er kann auch zur Verhinderung der sogenannten Stippenbildung (ein enzymatischer Vorgang, bei dem die Schalenteilchen in Mehl oxidiert werden) 0,025 bis 0,1 Gew. - %, vorzugsweise ca. 0,075 Gew. - %, einer Genussäure, wie Zitronensäure oder Apfelsäure, enthalten. Ein mit diesen Zusätzen versehener Teig ist für eine bestimmte Zeit bei 4 bis 6 °C ohne Tiefkühlung haltbar, was den Vorteil hat, dass das bei tiefgekühlten Teigen vor dem Auseinanderrollen erforderliche Auftauen, um ein Brechen des Teiges zu vermeiden, sich erübrigt.

Als Backpapier kommt ein Papier in Frage, das einseitig oder vorzugsweise beidseitig mit einer Trennsubstanz beschichtet ist. Als Trennsubstanz eignet sich ein für den direkten Kontakt mit Lebensmitteln zulässiges Silikon. Der Teig kann dann direkt auf diesem Backpapier gebacken werden.

Die beidseitige Beschichtung des Backpapiers ist insbesondere dann vor Vorteil, wenn das Backpapier sich nur auf einer Seite des Teiges befindet und somit auf seiner Rückseite mit der benachbarten Teigschicht in Berührung ist. Diese Ausführungsform kommt vor allem für langgestreckte Teigbahnen in Betracht.

Wenn sich das Backpapier auf beiden Seiten des Teiges befindet, was vor allem für runde oder quadratische Teigscheiben in Frage kommt, hat das Backpapier vorteilhaft die Form eines rechteckigen Abschnittes, der ungefähr entlang seiner Mittellinie über den Teig gefaltet ist und vorzugsweise auf oder in geringem Abstand neben und parallel zu seiner Mittellinie eine Perforierungslinie aufweist, so dass das überschüssige Backpapier vor dem Backen leicht abgerissen werden kann.

Wenn das Backpapier sich nur auf einer Seite des Teiges befindet, ist das Backpapier zweckmässig ein rechteckiger Abschnitt, der etwas länger und geringfügig breiter ist als der Teig, und die Teile des Backpapiers, die den Teig an einem der oder den beiden Längsenden überragen, ist bzw. sind über das bzw. die Ende(n) des Teiges zurückgefaltet, um das Ablösen der äussersten bzw. innersten Teigschicht

0 158 590

beim Auseinanderrollen des Teiges zu erleichtern. Die genannten, den Teig überragenden Teile des Backpapiers können mit einer quer verlaufenden Perforierungslinie versehen sein, so dass das überschüssige Backpapier vor dem Backen leicht abgerissen werden kann. Diese Ausführungsform eignet sich, wie oben erwähnt, besonders für längere Teigbahnen.

Um zu verhindern, dass der Teig austrocknet, wird die Rolle aus Teig und Backpapier vorteilhaft in einer Hülle, die vorzugsweise aus Kunststoff-Folie, insbesondere Klarsichtfolie, besteht, luft- und wasserdampfdicht verpackt. Gegebenenfalls wird die Luft innerhalb dieser Hülle durch ein Inertgas, wie Stickstoff und/oder Kohlendioxid, ersetzt. Vorzugsweise handelt es sich aber um eine Vakuumverpackung. Eine oder mehrere so verpackte Rollen können auf einer Unterlage bzw. auf einer gemeinsamen Unterlage oder in einem stapelbaren Behälter mit rechteckigem Querschnitt verpackt werden. Der Behälter besteht vorzugsweise aus Karton.

Die Rolle aus Teig und Backpapier kann aber auch ohne Hülle in einem stapelbaren Behälter, der vorzugsweise aus Karton besteht, verpackt werden. Der Querschnitt eines solchen Behälters hat vorzugsweise die Form eines gleichseitigen Dreiecks oder eines Rechtecks. Ein Behälter mit dreieckigem Querschnitt eignet sich besonders für eine raumsparende Stapelung. Der Behälter kann in einer Hülle aus Kunststoff-Folie, vorzugsweise Klarsichtfolie, luft- und wasserdampfdicht verpackt sein. Auch in diesem Falle wird die Luft innerhalb der Hülle gegebenenfalls durch ein Inertgas, wie Stickstoff, und/oder Kohlendioxid, ersetzt.

Der Teig kann als kreisförmige oder quadratische Scheibe oder als rechteckige Scheibe oder Bahn ausgebildet sein.

Wenn der Teig eine kreisförmige Scheibe ist, kann diese einen Durchmesser von 20 bis 45 cm, vorzugsweise ca. 33 cm, haben, damit sie auf übliche runde Backbleche passt. Wenn der Teig eine quadratische Scheibe ist, kann diese eine Kantenlänge von 20 bis 40 cm, vorzugsweise ca. 33 cm, haben. Derartige kreisförmige und quadratische Teigscheiben sind vorzugsweise auf beiden Seiten von einem rechteckigen, vorzugsweise beidseitig beschichteten Backpapier-Abschnitt bedeckt, der ungefähr entlang seiner Mittellinie gefaltet ist. Vorzugsweise hat der Backpapier-Abschnitt auf oder im Abstand neben und parallel zu seiner Mittellinie eine Perforierungslinie. Das überschüssige Backpapier kann infolgedessen leicht abgerissen und für andere Zwecke benutzt werden, während der Teig direkt mit dem restlichen Backpapier auf das Backblech gelegt und gebacken werden kann. Die oben definierten kreisförmigen bzw. quadratischen Teigscheiben können zusammen mit dem Backpapier-Abschnitt ohne Zuhilfenahme eines Trägers auf sich selbst aufgerollt sein oder auf einen zylinderförmigen Träger aufgerollt sein. Eine solche Rolle ist vorzugsweise in einem stapelbaren Behälter aus Karton enthalten ; der Querschnitt des Behälters hat zweckmässig die Form eines gleichseitigen Dreiecks. Der Behälter ist vorzugsweise stirnseitig offen und besteht aus einem längsgefalteten Zuschnitt, dessen freie Längsränder lose aneinanderliegen. Ein solcher Behälter ist vorzugsweise in einer Hülle aus Kunststoff-Folie, vorzugsweise Klarsichtfolie, luft- und wasserdampfdicht verpackt. Die Luft in der Hülle ist wiederum gegebenenfalls durch ein Inertgas, wie Stickstoff und/oder Kohlendioxid, ersetzt.

Der Teig kann auch als rechteckige Scheibe mit einer Breite von ca. 25 cm und einer Länge von ca. 42 cm ausgebildet sein. In diesem Falle eignet sich als Backpapier besonders ein rechteckiger, vorzugsweise beidseitig beschichteter Backpapier-Abschnitt, der länger und geringfügig breiter ist als die Teigscheibe. Zweckmässig sind die Teile des Backpapiers, die den Teig an einem der oder den beiden Längsenden überragen, über das bzw. die Ende(n) der Teigscheibe zurückgefaltet. Einer dieser Teile oder beide können eine quer verlaufende Perforierungslinie aufweisen, damit das überschüssige Backpapier leicht abgerissen werden kann. Eine solche Teigscheibe ist vorzugsweise zusammen mit dem Backpapier-Abschnitt ohne Zuhilfenahme eines Trägers auf sich selbst oder auch auf einen zylinderförmigen Träger aufgerollt. Diese Rolle ist vorzugsweise in einer Hülle aus Kunststoff-Folie, vorzugsweise Klarsichtfolie, luft- und wasserdampfdicht verpackt. Die Luft in der Hülle ist gegebenenfalls durch ein Inertgas, wie Stickstoff und/oder Kohlendioxid, ersetzt. Zwei oben definierte Teigscheiben können nebeneinander auf ein übliches rechteckiges Haushaltsbackblech gelegt und nach leichtem Andrücken gebacken werden. Aus diesem Grunde ist es zweckmässig, zwei derartige, in Klarsichtfolie verpackte Rollen in einem Behälter mit rechteckigem Querschnitt, der vorzugsweise aus Karton besteht, nebeneinander anzuordnen.

Der Teig kann ferner als rechteckige Bahn mit einer Breite von 20 bis 40 cm, vorzugsweise ca. 30 cm, und einer Länge von 50 bis 150 cm, vorzugsweise 100 bis 120 cm, ausgebildet sein. Derartige Teigbahnen können vor allem im Haushalt verwendet werden. Man kann ein passendes Stück der Teigbahn abschneiden und in die gewünschte Form zuschneiden, während der Rest des Teiges sich im Kühlschrank bei 4 bis 6 °C weiter aufbewahren lässt. Eine Teigbahn mit den obigen Abmessungen kann sich auf einem rechteckigen, vorzugsweise beidseitig beschichteten Backpapier-Abschnitt befinden, der länger und geringfügig breiter ist als die Teigbahn. Die Teile des Backpapier-Abschnittes, die die Teigbahn an einem der oder den beiden Längsenden überragen, ist bzw. sind vorzugsweise über das bzw. die Ende(n) der Teigbahn zurückgefaltet. Die Teigbahn ist zusammen mit dem Backpapier, gegebenenfalls unter Verwendung eines zylinderförmigen Trägers, zu einer Rolle aufgerollt. Der Träger ist vorzugsweise ein mit einem für den direkten Kontakt mit Lebensmitteln zugelassenen Kunststoff überzogener Kartonzylinder oder ein Zylinder aus einem für den direkten Kontakt mit Lebensmitteln zugelassenen Kunststoff, vorzugsweise Polyethylen oder Polypropylen. Die Rolle ist zweckmässig in einer

4

Hülle aus Kunststoff-Folie, vorzugsweise Klarsichtfolie, luft- und wasserdampfdicht verpackt, vorzugsweise vakuumverpackt. Die Luft innerhalb der Hülle kann aber auch durch ein Inertgas, wie Stickstoff und/oder Kohlendioxid, ersetzt sein.

Für die Verwendung bei Grossverbrauchern, wie Restaurants, Cafés, Kantinen, Metzgereien, Traiteurs usw., eignet sich eine rechteckige Teigbahn mit einer Breite von 30 bis 100 cm, vorzugsweise ca. 40 cm, und einer Länge von 100 bis 600 cm, vorzugsweise ca. 430 cm.

Nachfolgend werden mehrere Ausführungsbeispiele der Erfindung anhand einer vereinfachten Zeichnung beschrieben.

Es zeigt

Fig. 1 einen erfindungsgemäss ausgestalteten gebrauchsfertigen ausgewallten Teig in perspektivischer Darstellung ;

Fig. 2 eine zweite Ausführungsform des erfindungsgemässen Teiges in perspektivischer Darstellung ;

Fig. 3 ein Vorstadium des erfindungsgemässen Teiges in perspektivischer Darstellung ;

Fig. 4 eine Draufsicht auf ein zweites Vorstadium des erfindungsgemässen Teiges ;

Fig. 5 eine weitere Ausführungsform des erfindungsgemässen Teiges in perspektivischer Darstellung ;

Fig. 6 eine Draufsicht auf einen Zuschnitt für den in Fig. 5 dargestellten Behälter für den erfindungsgemässen Teig ;

Fig. 7 eine Draufsicht auf ein drittes Vorstadium des erfindungsgemässen Teiges ;

Fig. 8 einen Schnitt durch ein viertes Vorstadium des erfindungsgemässen Teiges.

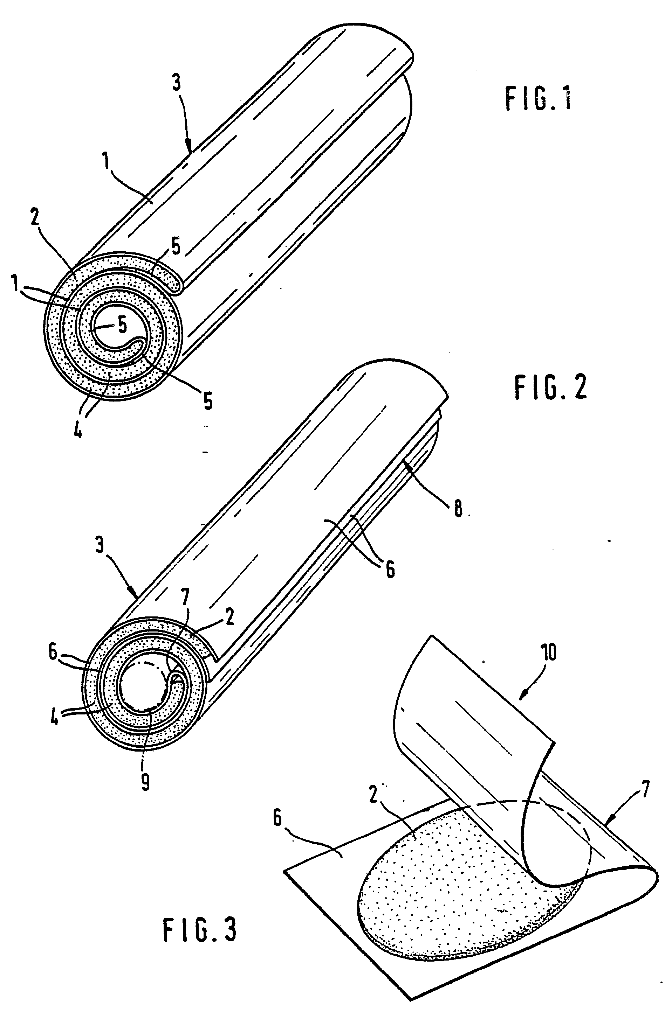

In Fig. 1 ist der ausgewallte Teig 2 in rechteckiger Form zusammen mit einem Backpapier 1 in ebenfalls rechteckiger und etwa gleich grosser Form zu einer zylinderförmigen Rolle 3 aufgerollt. Dabei befindet sich das Papier 1 zwischen den gerollten Schichten 4 des Teiges 2 sowie an der Aussenseite der Rolle 3. Das Papier 1 verhindert, dass sich die Schichten 4 berühren und dabei aneinanderkleben. Die Teile 5 des Papiers 1, die über den Teig 2 herausragen, sind zur Erleichterung des Auseinanderrollens der Rolle 3 über den Teig 2 zurückgefaltet. Gleichzeitig stützt das Papier 1 den Teig 2, so dass er sich besser transportieren lässt.

Beim zweiten Ausführungsbeispiel der Rolle 3 gemäss Fig. 2 befindet sich ein Backpapier 6 auf beiden Seiten des Teiges 2. Fig. 3 verdeutlicht, wie der ausgewallte Teig 2 in Form einer kreisförmigen Scheibe zunächst so verpackt wird, dass seine beiden Breitseiten von dem Papier 6 abgedeckt werden. Hierbei wird ein Papier-Abschnitt 10, der etwa doppelt so lang ist wie die quadratische Scheibe oder die rechteckige Scheibe oder Bahn des Teiges 2 oder wie der Durchmesser einer kreisförmigen Scheibe des Teiges 2, um den Teig 2 gefaltet. Es ist dabei zweckmässig, den Teig 2 zunächst auf eine Hälfte des Abschnittes 10 aufzulegen und dann die andere Hälfte auf den Teig 2 zu falten. Die ungefähr entlang der Mittellinie 7 des Abschnittes 10 verlaufende Falte ist auch in Fig. 2 dargestellt, in der allerdings im Unterschied zu Fig. 3 ein gewallter Teig 2 in rechteckiger Form gezeigt ist. Die Falte befindet sich in der in Fig. 2 dargestellten Ausführungsform am inneren Ende der Rolle 3. Es ist natürlich auch möglich, die Rolle 3 so aufzurollen, dass sich die Falte am äusseren Ende der Rolle 3 befindet.

Es empfiehlt sich, die Länge und Breite des Papiers 1 bzw. 6 etwas grösser zu wählen als die Abmessungen des Teiges 2, so dass das Papier 1 bzw. 6 geringfügig übersteht, wie es in Fig. 2 bei 8 beispielhaft verdeutlicht ist.

Die Stabilität des erfindungsgemässen Teiges kann dadurch verbessert werden, dass der Teig 2 mit dem Papier 1 bzw. 6 auf einen zylinderförmigen Träger aufgerollt wird, der z. B. durch einen in Fig. 2 andeutungsweise strichpunktiert dargestellten Kartonzylinder 9 gebildet sein kann. Hierdurch wird die Rolle 3 von innen her gestützt. Bei Verwendung eines zylinderförmigen Trägers empfiehlt es sich, einen genügend langen Teil 5 des Papiers 1 über den Teig 2 zurückzufalten oder ein Stück des Papiers 1 ohne Teig auf den Träger zu wickeln, so dass der Teig 2 nicht mit dem Träger 9 in Berührung kommt.

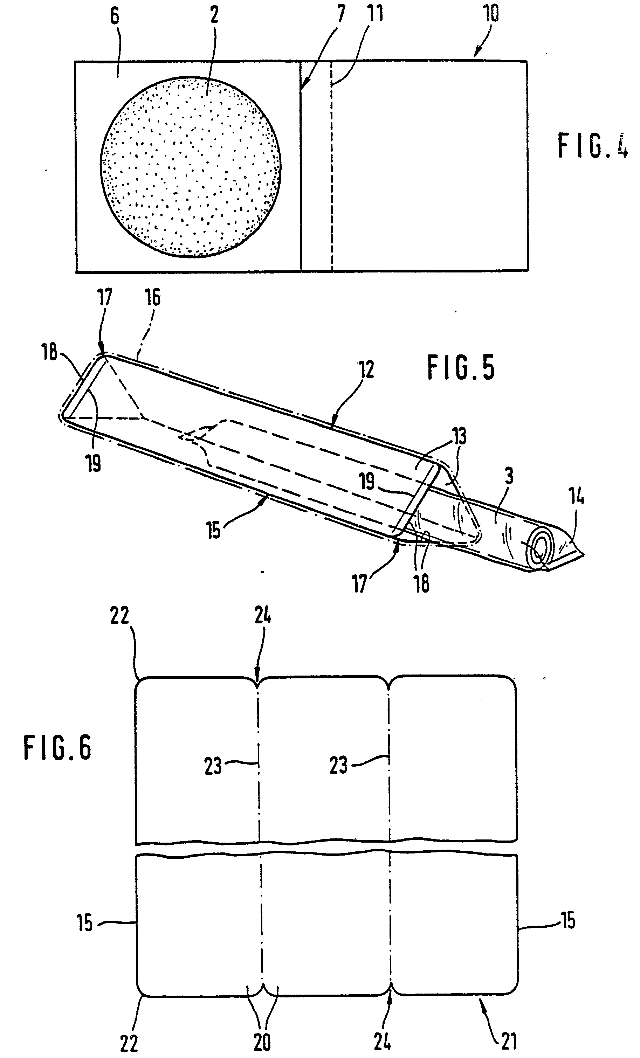

Fig. 4 zeigt den in Fig. 3 dargestellten Backpapier-Abschnitt 10 mit der auf die eine Hälfte des Abschnittes 10 aufgelegten kreisförmigen Teigscheibe 2. Auf oder im Abstand neben und parallel zu der Mittellinie 7 des Abschnittes 10 befindet sich eine Perforierungslinie 11, die es erlaubt, vor dem Backen das überschüssige Papier abzureissen und anderweitig zu verwenden. Die in Fig. 1 dargestellten zurückgefalteten Teile 5 eines Backpapiers 1 können ebenfalls eine auf oder im Abstand neben und parallel zu der Falte verlaufende Perforierungslinie aufweisen, um die Entfernung des überschüssigen Papiers zu erleichtern.

Die Rollen 3 können, wie in Fig. 5 angedeudet, in eine Hülle 14 verpackt sein. Diese Hülle 14 besteht zweckmässig aus Klarsichtfolie und ist luft- und wasserdampfundurchlässig. Vorzugsweise sind insbesondere die aus langen Teigbahnen bestehenden Rollen 3 für den Gebrauch im Haushalt oder bei Grossverbrauchern in einer solchen Hülle 14 vakuumverpackt, um das Austrocknen des Teiges 2 zu verhindern. Die Luft innerhalb der Hülle 14 kann aber auch durch ein Inertgas, wie Stickstoff und/oder Kohlendioxid, ersetzt sein.

Speziell die kreisförmige oder quadratische Scheiben des Teiges 2 mit relativ kleinen Abmessungen enthaltenden Rollen 3 können ohne Verwendung einer Hülle 14 in Kartons 12 mit dreieckigem Querschnitt verpackt werden. Ein Karton 12, dessen Querschnitt die Form eines gleichseitigen Dreiecks hat, ist in Fig. 5 dargestellt. Er weist Wände 13 auf und ist stirnseitig offen. In Fig. 5 ist die Rolle 3 etwas aus dem Karton 12 herausgezogen dargestellt. Ein solcher, eine Rolle 3 ohne Hülle 14 enthaltender Karton 12 wird zweckmässig in einer Hülle 16 aus Klarsichtfolie luft- und wasserdampfdicht verpackt, so dass die Rolle 3 nicht aus dem Karton 12 herausrutschen kann, der Teig 2 nicht austrocknen kann und die z. B. dreisprachige Beschriftung des Kartons 12 gut leserlich ist. Es ist natürlich auch möglich, Kartons mit quadratischem oder rechteckigem Querschnitt zu verwenden, um in einer Hülle 14 befindliche Rollen 3 zu verpacken, wobei insbesondere in Kartons mit rechteckigem Querschnitt mehrere Rollen 3 verpackt werden können.

Eine einfache Ausgestaltung für einen Karton 12 besteht darin, ihn aus ebenen, längsgefalteten, z. B. Karton-Abschnitten 20 zu bilden, wie es in Fig. 6 dargestellt ist. Bei einer solchen Ausgestaltung liegen die freien Längskanten 15 der Abschnitte 20 lose aneinander. Dabei erhält der Karton 12 seine Stabilität durch eine ihn umgebende Hülle 16, die in der Fig. 5 strichpunktiert angedeutet ist. Insbesondere dann, wenn eine Hülle 14 in einem röhrenförmigen Karton 12 aufgenommen ist, empfiehlt es sich, die Hülle 16 allseitig zu verschliessen, z. B. einzusiegeln, um eine Anzeige für eine Oeffnung dieser Verpackung vorliegen zu haben. Die Rolle 3 kann aber auch ohne Hülle 14 in den Karton 12 eingelegt werden und der Karton 12 mit der Rolle 3 in eine Hülle 16 aus Kunststoff-Folie, vorzugsweise Klarsichtfolie, luft- und wasserdampfdicht verpackt sein. Es ist jedoch ebenfalls möglich, die Luft innerhalb der Hülle 16 durch ein Inertgas, wie Stickstoff und/oder Kohlendioxid, zu ersetzen.

Für einen in einer Hülle 16 aufgenommenen Karton 12 ist es vorteilhaft, wenn seine Ecken 17 abgeschrägt oder abgerundet sind. Hierdurch wird ein Einschneiden der Hülle 16 durch die Ecken 17 insbesondere beim Hereinschieben des Kartons 12 in die Hülle 16 vermieden. Wenn ein so ausgestalteter Karton 12 beim Verschieben in der Hülle 16 auf Widerstand stösst, biegen die stirnseitigen Ränder 18 um andeutungsweise dargestellte Linien 19 ein, wodurch ein ungestörtes Einführen gewährleistet ist.

In der Fig. 6 ist eine Möglichkeit dargestellt, einen Zuschnitt 21 für einen Karton 12 so auszugestalten, dass sich gerundete Ecken 17 ergeben. Hierzu sind die Ecken 22 des Zuschnittes 21 gerundet, und im Bereich der Faltlinien 23 sind Einschnitte 24 mit bevorzugt konkaven Konturen vorgesehen, die gerundete Ecken 17 ergeben.

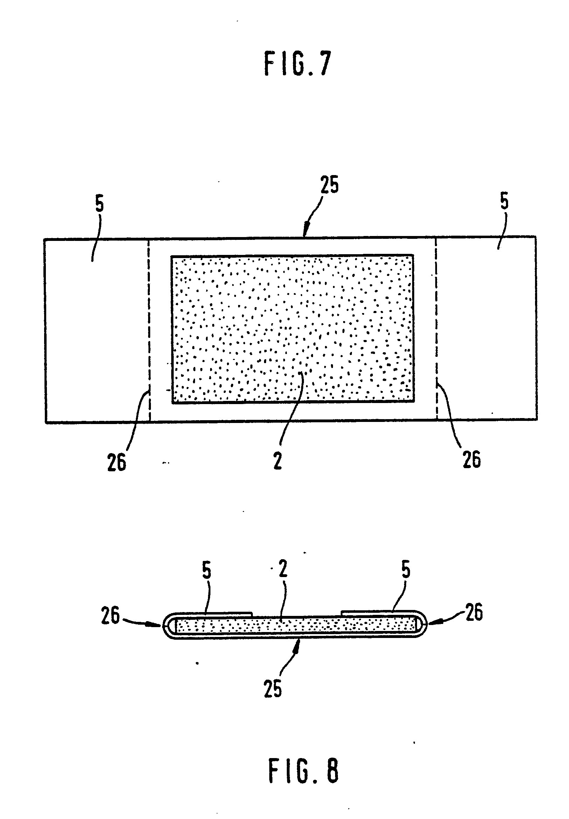

Fig. 7 zeigt schematisch, wie der ausgewallte Teig 2 in Form einer rechteckigen Scheibe oder einer langgestreckten rechteckigen Bahn auf einen entsprechenden Backpapier-Abschnitt 25 aufgelegt wird. Der Abschnitt 25 weist in Abstand neben und parallel zu den Längsenden des Teiges 2 Perforierungslinien 26 auf, so dass die den Teig überragenden Teile 5 des Abschnittes 25 leicht abgerissen werden können, nachdem die aus der Kombination aus Teig 2 und Abschnitt 25 gebildete Rolle 3 wieder auseinandergerollt worden ist.

Vor dem Aufrollen der Kombination aus Teig 2 und Abschnitt 25 zu der Rolle 3 werden die den Teig 2 überragenden Teile 5 des Abschnittes 25 entlang der Perforierungslinien 26 über die Längsenden des Teiges 2 zurückgefaltet. Dadurch wird, wie oben erwähnt, das Auseinanderrollen der Rolle 3 erleichtert. Fig. 8 zeigt schematisch einen Schnitt in Längsrichtung durch das Gebilde, das durch das Zurückfalten der Teile 5 über den Teig 2 erhalten wird.

Der erfindungsgemässe Teig hat folgende Vorteile : Er ist frisch, sofort gebrauchsfertig, klebt nicht zusammen, braucht nicht ausgewallt zu werden, ist nicht gefaltet, so dass er nicht an den Falten aufreissen kann, und ist platzsparend verpackt. Die überschüssigen Teile des Backpapiers können leicht entfernt werden und der Teig auf dem Papier gebacken werden, wodurch das Reinigen des Backbleches erleichtert wird.

Wenn der Teig als runde Scheibe ausgebildet ist, kann diese z. B. in 8 Segmente zerschnitten werden, die zu Gipfeln (Hörnchen, Croissants) aufgewickelt werden können. Ist der Teig hingegen als rechteckige Bahn ausgebildet, kann ein passendes Stück der Rolle abgeschnitten und in die gewünschte Form zugeschnitten werden, während der Rest der Rolle sich im Kühlschrank bei 4 bis 6 °C weiter aufbewahren lässt. Z. B. kann der Teig in Streifen oder andere Stücke zerschnitten werden, um Würste einzuwickeln usw.

**Patentansprüche**

1. Gebrauchsfertiger, ausgewallter Teig (2), der zusammen mit einem flexiblen Flächengebilde aus Einwickelmaterial zu einem Zylinder aufgerollt ist, dadurch gekennzeichnet, dass sich auf mindestens einer Seite des Teiges (2) ein Backpapier (1, 6) befindet und dass der Teig (2) zusammen mit dem Backpapier (1, 6) zu einer mindestens annähernd zylinderförmigen Rolle (3) aufgerollt ist.

2. Teig nach Anspruch 1, dadurch gekennzeichnet, dass der Teig (2) zusammen mit dem Backpapier (1, 6) ohne Zuhilfenahme eines Trägers auf sich selbst aufgerollt ist.

3. Teig nach Anspruch 1, dadurch gekennzeichnet, dass der Teig (2) zusammen mit dem Backpapier (1, 6) auf einen zylinderförmigen Träger (9) aufgerollt ist.

4. Teig nach Anspruch 3, dadurch gekennzeichnet, dass der Träger (9) ein mit einem für den direkten Kontakt mit Lebensmitteln zugelassenen Kunststoff überzogener Kartonzylinder ist oder ein Zylinder aus einem für den direkten Kontakt mit Lebensmitteln zugelassenen Kunststoff, vorzugsweise Polyethylen oder Polypropylen, ist, der vorzugsweise mit dem Backpapier (1, 6) durch Verkleben oder Verschweissen fest verbunden ist.

5. Teig nach einem der Ansprüche 1 bis 4, dadurch gekennzeichnet, dass es sich um Kuchenteig, Blätterteig, Mürbeteig oder Pizzateig handelt.

6. Teig nach einem der Ansprüche 1 bis 5, dadurch gekennzeichnet, dass er als Hauptkomponenten 5 bis 25 Gew. - % Wasser, 15 bis 35 Gew. - % Fett, 35 bis 60 Gew. - % Mehl und 0,5 bis 2,5 Gew. - % Salz enthält.

7. Teig nach Anspruch 6, dadurch gekennzeichnet, dass er ein Kuchen- oder Blätterteig ist und 20 bis 24 Gew. - % Wasser, 26 bis 29 Gew. - % Fett, 47 bis 50 Gew. - % Mehl und 1 bis 2 Gew. - % Salz enthält.

8. Teig nach einem der Ansprüche 1 bis 7, dadurch gekennzeichnet, dass er insgesamt bis zu 0,2 Gew. - %, vorzugsweise bis zu 0,06 Gew. - %, mindestens eines Konservierungsmittels, vorzugsweise Propionsäure und/oder Sorbinsäure und/oder deren Salze, enthält.

9. Teig nach einem der Ansprüche 1 bis 8, dadurch gekennzeichnet, dass er 0,025 bis 0,1 Gew. - %, vorzugsweise ca. 0,075 Gew. - %, einer Genusssaüre, insbesondere Zitronensäure oder Apfelsäure, enthält.

10. Teig nach einem der Ansprüche 1 bis 9, dadurch gekennzeichnet, dass der Backpapier (6) ein beide Seiten des Teiges bedeckender rechteckiger Abschnitt (10), vorzugsweise aus beidseitig beschichtetem Backpapier, ist, der ungefähr entlang seiner Mittellinie (7) gefaltet ist und vorzugsweise auf oder im Abstand neben und parallel zu der Mittellinie (7) eine Perforierungslinie (11) aufweist.

11. Teig nach einem der Ansprüche 1 bis 9, dadurch gekennzeichnet, dass das Backpapier (1) ein rechteckiger Abschnitt (25), vorzugsweise aus beidseitig beschichtetem Backpapier, ist, der länger und geringfügig breiter ist als der Teig (2), wobei die den Teig (2) an einem der oder den beiden Längsenden überragenden Teile (5) des Abschnittes (25) über das bzw. die Ende(n) des Teiges (2) zurückgefaltet ist bzw. sind und einer der Teile (5) oder beide eine quer verlaufende Perforierungslinie (26) aufweisen können.

12. Teig nach einem der Ansprüche 1 bis 11, dadurch gekennzeichnet, dass die Rolle (3) in einer Hülle (14) aus Kunststoff-Folie, vorzugsweise Klarsichtfolie, luft- und Wasserdampfdicht verpackt ist, wobei die Luft innerhalb der Hülle (14) gegebenenfalls durch ein Inertgas, wie Stickstoff und/oder Kohlendioxid, ersetzt ist.

13. Teig nach Anspruch 12, dadurch gekennzeichnet, dass die Rolle (3) in der Hülle (14) vakuumverpackt ist.

14. Teig nach einem der Ansprüche 1 bis 13, dadurch gekennzeichnet, dass die Rolle (3) in einem stapelbaren Behälter (12), vorzugsweise aus Karton, dessen Querschnitt vorzugsweise die Form eines gleichseitigen Dreiecks oder eines Rechtecks hat, enthalten ist.

15. Teig nach Anspruch 14, dadurch gekennzeichnet, dass der Behälter (12) in einer Hülle (16) aus Kunststoff-Folie, vorzugsweise Klarsichtfolie, luft- und wasserdampfdicht verpackt ist, wobei die Luft innerhalb der Hülle (16) gegebenenfalls durch ein Inertgas, wie Stickstoff und/oder Kohlendioxid, ersetzt ist.

16. Teig nach einem der Ansprüche 1 bis 15, dadurch gekennzeichnet, dass er als kreisförmige oder quadratische Scheibe oder als rechteckige Scheibe oder Bahn ausgebildet ist.

17. Teig nach Anspruch 16, dadurch gekennzeichnet, dass er als kreisförmige Scheibe mit einem Durchmesser von 20 bis 45 cm, vorzugsweise ca. 33 cm, oder als quadratische Scheibe mit einer Kantenlänge von 20 bis 40 cm, vorzugsweise ca. 33 cm, ausgebildet ist.

18. Teig nach Anspruch 17, dadurch gekennzeichnet, dass das Backpapier (6) ein beide Seiten des Teiges (2) bedeckender rechteckiger, vorzugsweise beidseitig beschichteter Backpapier-Abschnitt (10) ist, der ungefähr entlang seiner Mittellinie (7) gefaltet ist und vorzugsweise auf oder im Abstand neben und parallel zu der Mittellinie (7) eine Perforierungslinie (11) aufweist.

19. Teig nach Anspruch 18, dadurch gekennzeichnet, dass er mit dem Backpapier-Abschnitt (10) entweder ohne Zuhilfenahme eines Trägers auf sich selbst aufgerollt ist oder auf einen zylinderförmigen Träger (9) aufgerollt ist.

20. Teig nach Anspruch 19, dadurch gekennzeichnet, dass die Rolle (3) in einem stapelbaren Behälter (12) aus Karton, dessen Querschnitt die Form eines gleichseitigen Dreiecks hat, enthalten ist, wobei der Behälter (12) stirnseitig offen ist und ausschliesslich aus einem längsgefalteten Zuschnitt (21) besteht, dessen freie Längsränder (15) lose aneinanderliegen, und wobei der Behälter (12) in einer Hülle (16) aus Kunststoff-Folie, vorzugsweise Klarsichtfolie, in der die Luft gegebenenfalls durch ein Inertgas, wie Stickstoff, und/oder Kohlendioxid, ersetzt ist, luft- und wasserdampfdicht verpackt ist.

21. Teig nach Anspruch 16, dadurch gekennzeichnet, dass er als rechteckige Scheibe mit einer Breite von ca. 25 cm und einer Länge von ca. 42 cm ausgebildet ist.

22. Teig nach Anspruch 21, dadurch gekennzeichnet, dass das Backpapier (1) ein rechteckiger, vorzugsweise beidseitig beschichteter Backpapier-Abschnitt (25) ist, der länger und geringfügig breiter ist als der Teig (2), wobei die den Teig (2) an einem der oder den beiden Längsenden überragenden Teile (5) des Backpapier-Abschnittes (25) über das bzw. die Ende(n) des Teiges (2) zurückgefaltet ist bzw. sind und einer der Teile (5) oder beide eine quer verlaufende Perforierungslinie (26) aufweisen können.

23. Teig nach Anspruch 22, dadurch gekennzeichnet, dass er mit dem Backpapier-Abschnitt (25) entweder ohne Zuhilfenahme eines Trägers auf sich selbst aufgerollt ist oder auf einen zylinderförmigen Träger (9) aufgerollt ist.

24. Teig nach Anspruch 24, dadurch gekennzeichnet, dass die Rolle (3) in einer Hülle (14) aus Kunststoff-Folie, vorzugsweise Klarsichtfolie, in der die Luft gegebenenfalls durch ein Inertgas, wie Stickstoff und/oder Kohlendioxid, ersetzt ist, luft- und wasserdampfdicht verpackt ist.

25. Teig nach Anspruch 24, dadurch gekennzeichnet, dass zwei in je einer Hülle (14) aus Kunststoff-Folie, vorzugsweise Klarsichtfolie, luft- und wasserdampfdicht verpackte Rollen (3) in einem Behälter aus vorzugsweise Karton mit rechteckigem Querschnitt nebeneinander liegend angeordnet sind.

26. Teig nach Anspruch 16, dadurch gekennzeichnet, dass er als rechteckige Bahn mit einer Breite von 20 bis 40 cm und einer Länge von 50 bis 150 cm, vorzugsweise mit einer Breite von ca. 30 cm und einer Länge von 100 bis 120 cm, ausgebildet ist.

27. Teig nach Anspruch 26, dadurch gekennzeichnet, dass das Backpapier (1) ein rechteckiger, vorzugsweise beidseitig beschichteter Backpapier-Abschnitt (25) ist, der länger und geringfügig breiter ist als der Teig (2), wobei die den Teig (2) an einem der oder den beiden Längsenden überragenden Teile (5) des Backpapier-Abschnittes (25) über das bzw. die Ende(n) des Teiges (2) zurückgefaltet ist bzw. sind und einer der Teile (5) oder beide eine quer verlaufende Perforierungslinie aufweisen können.

28. Teig nach Anspruch 27, dadurch gekennzeichnet, dass er mit dem Backpapier-Abschnitt (25) entweder ohne Zuhilfenahme eines Trägers auf sich selbst aufgerollt ist oder auf einen zylinderförmigen Träger (9), vorzugsweise einen mit einem für den direkten Kontakt mit Lebensmitteln zugelassenen Kunststoff überzogenen Kartonzylinder oder einen Zylinder aus einem für den direkten Kontakt mit Lebensmitteln zugelassenen Kunststoff, vorzugsweise Polyethylen oder Polypropylen, aufgerollt ist.

29. Teig nach Anspruch 28, dadurch gekennzeichnet, dass die Rolle (3) in einer Hülle (14) aus Kunststoff-Folie, vorzugsweise Klarsichtfolie, in der die Luft gegebenenfalls durch ein Inertgas, wie Stickstoff und/oder Kohlendioxid, ersetzt ist, luft- und wasserdampfdicht verpackt ist.

30. Teig nach Anspruch 29, dadurch gekennzeichnet, dass die Rolle (3) in der Hülle (14) vakuumverpackt ist.

31. Teig nach Anspruch 16, dadurch gekennzeichnet, dass er als rechteckige Bahn mit einer Breite von 30 bis 100 cm und einer Länge von 100 bis 600 cm, vorzugsweise mit einer Breite von ca. 40 cm und einer Länge von ca. 430 cm, ausgebildet ist.


**Claims**

1. Rolled-out pastry or dough (2) ready for use, which is rolled up, together with a flexible flat-shaped article of wrapping material, to form a cylinder, characterised in that there is baking paper (1, 6) provided on at least one side of the pastry or dough (2) and in that the pastry or dough (2) together with the baking paper (1, 6) is rolled up to form an at least approximately cylindrical roll (3).

2. Pastry or dough as claimed in claim 1, characterised in that the pastry or dough (2) is rolled up on itself together with the baking paper (1, 6) without the aid of a support.

3. Pastry or dough as claimed in claim 1, characterised in that the pastry or dough (2) is rolled up together with the baking paper (1, 6) on a cylindrical support (9).

4. Pastry or dough as claimed in claim 3, characterised in that the support (9) is a cardboard cylinder coated with a plastics material permitted for direct contact with foodstuffs or it is a cylinder of plastics material permitted for direct contact with foodstuffs, preferably polyethylene or polypropylene, which is preferably firmly attached to the baking paper (1, 6) by sticking or welding.

5. Pastry or dough as claimed in one of claims 1 to 4, characterised in that it is cake dough, puff pastry, short pastry or pizza dough.

6. Pastry or dough as claimed in one of claims 1 to 5, characterised in that it contains as its main components 5 to 25 % by weight of water, 15 to 35 % by weight of fat, 35 to 60 % by weight of flour and 0.5 to 2.5 % by weight of salt.

7. Pastry or dough as claimed in claim 6, characterised in that it is a cake dough or puff pastry and contains 20 to 24 % by weight of water, 26 to 29 % by weight of fat, 47 to 50 % by weight of flour and 1 to 2 % by weight of salt.

8. Pastry or dough as claimed in one of claims 1 to 7, characterised in that it contains, in all, up to 0.2 % by weight, preferably up to 0.06 % by weight, of at least one preservative, preferably propionic acid and/or sorbic acid and/or the salts thereof.

9. Pastry or dough as claimed in one of claims 1 to 8, characterised in that it contains 0.025 to 0.1 % by weight, preferably about 0.075 % by weight, of an edible acid, particularly citric acid or malic acid.

10. Pastry or dough as claimed in one of claims 1 to 9, characterised in that the baking paper (6) is a rectangular sheet (10) which covers the pastry or dough on both sides, preferably a sheet of baking paper coated on both sides, folded approximately along its centre line (7) and preferably having a line of perforations (11) on or close beside and parallel to the centre line (7).

11. Pastry or dough as claimed in one of claims 1 to 9, characterised in that the baking paper (1) is a rectangular sheet (25) preferably of baking paper coated on both sides, which is longer and slightly wider than the pastry or dough (2), whilst the parts (5) of the sheet (25) projecting beyond the pastry or dough (2) at one or both of the longitudinal ends is or are folded back over the end or ends of the pastry or dough (2) and one of the parts (5) or both parts may have a line of perforations (26) running across them.

12. Pastry or dough as claimed in one of claims 1 to 11, characterised in that the roll (3) is packed in a sleeve (14) of plastics film, preferably transparent film, in air-tight and steam-tight manner, the air inside the sleeve (14) optionally being replaced by an inert gas such as nitrogen and/or carbon dioxide.

13. Pastry or dough as claimed in claim 12, characterised in that the roll (3) is vacuum-packed in the sleeve (14).

14. Pastry or dough as claimed in one of claims 1 to 13, characterised in that the roll (3) is contained in a strackable container (12) preferably of cardboard, the cross-section of which is preferably in the form of an equilateral triangle or a rectangle.

15. Pastry or dough as claimed in claim (14), characterised in that the container (12) is packed in a sleeve (16) of plastics film, preferably transparent film, in air-tight and steam-tight manner, the air inside the sleeve (16) optionally being replaced by an inert gas such as nitrogen and/or carbon dioxide.

16. Pastry or dough as claimed in one of claims 1 to 15, characterised in that it is constructed as a circular or square sheet or as a rectangular sheet or length.

17. Pastry or dough as claimed in claim 16, characterised in that it is in the form of a circular disc with a diameter of 20 to 45 cm, preferably about 33 cm, or a square sheet with sides 20 to 40 cm long, preferably about 33 cm long.

18. Pastry or dough as claimed in claim 17, characterised in that the baking paper (6) is a rectangular sheet (10) of baking paper which covers both sides of the pastry or dough (2) and is preferably coated on both sides, folded approximately along its centre line (7) and preferably having a line of perforations (11) on or close beside and parallel to the centre line (7).

19. Pastry or dough as claimed in claim 18, characterised in that it is rolled up on itself with the sheet (10) of baking paper either without the aid of a support or on a cylindrical support (9).

20. Pastry or dough as claimed in claim 19, characterised in that the roll (3) is contained in a stackable container (12) made of cardboard, the cross-section of which is in the form of an equilateral triangle, the container (12) being open at the ends and consisting exclusively of a blank (21) folded lengthwise, the free longitudinal edges (15) of which abut loosely on one another, whilst the container (12) is packed in air-tight and steam-tight manner in a sleeve (16) of plastics film, preferably transparent film, in which the air is optionally replaced by an inert gas such as nitrogen and/or carbon dioxide.

21. Pastry of dough as claimed in claim 16, characterised in that it is in the form of a rectangular sheet about 25 cm wide and about 42 cm long.

22. Pastry or dough as claimed in claim 21, characterised in that the baking paper (1) is a rectangular sheet (25) of baking paper, preferably coated on both sides, which is longer and slightly wider than the pastry or dough (2) whilst the parts (5) of the sheet (25) of baking paper projecting over the pastry or dough (2) at one or both longitudinal ends is or are folded back over the end or ends of the pastry or dough (2) and one of the parts (5) or both parts may have a line of perforations (26) running across them.

23. Pastry or dough as claimed in claim 22, characterised in that it is rolled up onto itself with the sheet (25) of baking paper, either without the aid of a support or on a cylindrical support (9).

24. Pastry or dough as claimed in claim 23, characterised in that the roll (3) is packed in air-tight and steam-tight manner in a sleeve (14) of plastics film, preferably transparent film, in which the air is optionally replaced by an inert gas such as nitrogen and/or carbon dioxide.

25. Pastry or dough as claimed in claim 24, characterised in that two rolls (3) packed in air-tight and steam-tight manner each in its own sleeve (14) of plastics film, preferably transparent film, are arranged side by side in a container, preferably of cardboard, with a rectangular cross-section.

26. Pastry or dough as claimed in claim 16, characterised in that it is in the form of a rectangular sheet 20 to 40 cm wide and 50 to 150 cm long, preferably about 30 cm wide and 100 to 120 cm long.

27. Pastry or dough as claimed in claim 26, characterised in that the baking paper (1) is a rectangular sheet (25) of baking paper preferably coated on both sides, longer and slightly wider than the pastry or dough (2), whilst the parts (5) of the sheet (25) of baking paper projecting beyond the pastry or dough (2) at one or both of the longitudinal ends is or are folded back over the end or ends of the pastry or dough (2) and one of the parts (5) or both parts may have a line of perforations extending across them.

28. Pastry or dough as claimed in claim 27, characterised in that it is rolled up onto itself with the sheet (25) of baking paper either without the aid of a support or onto a cylindrical support (9), preferably a cardboard cylinder coated with a plastics material permitted for direct contact with foodstuffs or a cylinder consisting of a plastics material permitted for direct contact with foodstuffs, preferably polyethylene or polypropylene.

29. Pastry or dough as claimed in claim 28, characterised in that the roll (3) is packed in air-tight and steam-tight manner in a sleeve (14) of plastics film, preferably transparent film, in which the air is optionally replaced by an inert gas such as nitrogen and/or carbon dioxide.

30. Pastry or dough as claimed in claim 29, characterised in that the roll (3) is vacuum packed in the sleeve (14).

31. Pastry or dough as claimed in claim 16, characterised in that it is in the form of a rectangular sheet 30 to 100 cm wide and 100 to 600 cm long, preferably about 40 cm wide and about 430 cm long.

**Revendications**

1. Pâte laminée prête à l'emploi (2) qui est enroulée en un cylindre conjointement avec un produit plat flexible en matière d'emballage, caractérisée en ce qu'un papier de protection pour la cuisson au four (1, 6) est présent sur au moins un côté de la pâte (2) et celle-ci est enroulée en un rouleau (3) au moins approximativement cylindrique, conjointement avec le papier de protection pour la cuisson au four (1, 6).

2. Pâte suivant la revendication 1, caractérisée en ce qu'elle est enroulée sur elle-même sans l'aide d'un support, conjointement avec le papier de protection pour la cuisson au four (1, 6).

3. Pâte suivant la revendication 1, caractérisée en ce qu'elle est enroulée sur un support cylindrique (9), conjointement avec le papier de protection pour la cuisson au four (1, 6).

4. Pâte suivant la revendication 3, caractérisée en ce que le support (9) est un cylindre en carton enduit d'une matière plastique homologuée pour le contact direct avec des denrées alimentaires ou un cylindre en une matière plastique homologuée pour le contact direct avec des denrées alimentaires, de préférence en polyéthylène ou en polypropylène, qui est de préférence relié solidement par collage ou par soudage au papier de protection pour la cuisson au four (1, 6).

5. Pâte suivant l'une quelconque des revendications 1 à 4, caractérisée en ce qu'il s'agit de pâte à tartes, de pâte feuilletée, de pâte brisée ou de pâte à pizzas.

6. Pâte suivant l'une quelconque des revendications 1 à 5, caractérisé en ce qu'elle contient, à titre de constituants principaux, 5 à 25 % en poids d'eau, 15 à 35 % en poids de matière grasse, 35 à 60 % en poids de farine et 0,5 à 2,5 % en poids de sel.

7. Pâte suivant la revendication 6, caractérisée en ce qu'il s'agit d'une pâte à tartes ou d'une pâte feuilletée qui contient 20 à 24 % en poids d'eau, 26 à 29 % en poids de matière grasse, 47 à 50 % en poids de farine et 1 à 2 % en poids de sel.

8. Pâte suivant l'une quelconque des revendications 1 à 7, caractérisée en ce que, au total, elle contient jusqu'à 0,2 % en poids et de préférence jusqu'à 0,06 % en poids d'au moins un agent de conservation, de préférence d'acide propionique et/ou d'acide sorbique et/ou de sels de ceux-ci.

9. Pâte suivant l'une quelconque des revendications 1 à 8, caractérisée en ce qu'elle contient 0,025 à 0,1 % en poids, de préférence environ 0,075 % en poids d'un acide alimentaire, en particulier d'acide citrique ou d'acide malique.

10. Pâte suivant l'une quelconque des revendications 1 à 9, caractérisée en ce que le papier de protection pour la cuisson au four (6) est une section rectangulaire (10) couvrant les deux côtés de la pâte, de préférence en papier de protection pour la cuisson au four enduit sur ses deux faces, qui est pliée approximativement suivant sa ligne médiane (7) et présente de préférence une ligne de perforations (11) située sur sa ligne médiane (7) ou située parallèlement à distance de celle-ci.

11. Pâte suivant l'une quelconque des revendications 1 à 9, caractérisée en ce que le papier de protection pour la cuisson au four (1) est une section rectangulaire (25), de préférence en papier de protection pour la cuisson au four enduit sur ses deux faces, qui est plus longue et un peu plus large que la pâte (2), tandis que les parties (5) de la section (25) qui dépassent de la pâte (2) à l'une des ou aux deux extrémités longitudinales sont repliées par-dessus la ou les extrémités de la pâte (2), une ligne de perforations (26) transversale pouvant être présente dans l'une des ou les deux parties (5).

12. Pâte suivant l'une quelconque des revendications 1 à 11, caractérisée en ce que le rouleau (3) est emballé d'une manière étanche à l'air et à la vapeur d'eau dans une enveloppe (14) en pellicule de matière plastique, de préférence en pellicule transparente, l'air présent à l'intérieur de l'enveloppe (14) étant éventuellement remplacé par un gaz inerte, comme de l'azote et/ou du dioxyde de carbone.

13. Pâte suivant la revendication 12, caractérisée en ce que le rouleau (3) est emballé sous vide dans l'enveloppe (14).

14. Pâte suivant l'une quelconque des revendications 1 à 13, caractérisé en ce que le rouleau (3) est contenu dans une boîte empilable (12), de préférence en carton, dont la section transversale a de préférence la forme d'un triangle équilatéral ou d'un rectangle.

15. Pâte suivant la revendication 14, caractérisée en ce que la boîte (12) est emballée d'une manière étanche à l'air et à la vapeur d'eau dans une enveloppe (16) en pellicule de matière plastique, de préférence en pellicule transparente, l'air présent à l'intérieur de l'enveloppe (16) étant éventuellement remplacé par un gaz inerte, comme de l'azote et/ou du dioxyde de carbone.

16. Pâte suivant l'une quelconque des revendications 1 à 15, caractérisée en ce qu'elle a la forme d'une plaque ronde ou carrée ou d'une plaque ou bande rectangulaire.

17. Pâte suivant la revendication 16, caractérisée en ce qu'elle a la forme d'une plaque ronde, présentant un diamètre de 20 à 45 cm, de préférence d'environ 33 cm, ou d'une plaque carrée, présentant une longueur de côté de 20 à 40 cm, de préférence d'environ 33 cm.

18. Pâte suivant la revendication 17, caractérisée en ce que le papier de protection pour la cuisson au four (6) est une section rectangulaire (10), de préférence en papier de protection pour la cuisson au four enduit sur ses deux faces, qui recouvre les deux faces de la pâte (2), qui est pliée approximativement suivant sa ligne médiane (7) et présente de préférence une ligne de perforations (11) située sur sa ligne médiane (7) ou située parallèlement à distance de celle-ci.

19. Pâte suivant la revendication 18, caractérisée en ce qu'elle est enroulée sur elle-même sans l'aide d'un support ou sur un support cylindrique (9), conjointement avec la section de papier de protection pour la cuisson au four (10).

20. Pâte suivant la revendication 19, caractérisée en ce que le rouleau (3) est contenu dans une boîte empilable (12) en carton, dc    la section transversale a la forme d'un triangle équilatéral, la boîte (12) étant ouverte à ses extrémités d'about et étant formée exclusivement d'un flan plié longitudinalement (21) dont les bords longitudinaux libres (15) sont appliqués sans serrage l'un sur l'autre, et cette boîte (12) étant emballée d'une matière étanche à l'air et à la vapeur d'eau dans une enveloppe (16) en pellicule de matière plastique, de préférence en pellicule transparente, dans laquelle l'air est éventuellement remplacé par un gaz inerte, comme de l'azote et/ou du dioxyde de carbone.

21. Pâte suivant la revendication 16, caractérisée en ce qu'elle a la forme d'une plaque rectangulaire présentant une largeur d'environ 25 cm et une longueur d'environ 42 cm.

22. Pâte suivant la revendication 21, caractérisée en ce que le papier de protection pour la cuisson au four (1) est une section rectangulaire (25), de préférence en papier de protection pour la cuisson au four enduit sur ses deux faces, qui est plus longue et un peu plus large que la pâte (2), tandis que les parties (5) de la section de papier de protection pour la cuisson au four (25) qui dépassent de la pâte à l'une des ou aux deux extrémités longitudinales sont repliées par-dessus la ou les extrémités de la pâte (2), une ligne de perforations transversale (26) pouvant être présente dans l'une des ou les deux parties (5).

23. Pâte suivant la revendication 22, caractérisée en ce qu'elle est enroulée sur elle-même sans l'aide d'un support ou sur un support cylindrique (9), conjointement avec la section de papier de protection pour la cuisson au four (25).

24. Pâte suivant la revendication 23, caractérisée en ce que le rouleau (3) est emballé d'une manière étanche à l'air et à la vapeur d'eau dans une enveloppe (14) en pellicule de matière plastique, de préférence en pellicule transparente, dans laquelle l'air est remplacé éventuellement par un gaz inerte, comme de l'azote et/ou du dioxyde de carbone.

25. Pâte suivant la revendication 24, caractérisée en ce que deux rouleaux (3) emballés chacun d'une manière étanche à l'air et à la vapeur d'eau dans une envoloppe (14) en pellicule de matière plastique, de préférence en pellicule transparente, sont disposés côte à côte dans une boîte, de préférence en carton, de section transversale rectangulaire.

26. Pâte suivant la revendication 16, caractérisée en ce qu'elle a la forme d'une bande rectangulaire d'une largeur d'environ 20 à 40 cm et d'une longueur de 50 à 150 cm, de préférence d'une largeur d'environ 30 cm et d'une longueur de 100 à 120 cm.

27. Pâte suivant la revendication 26, caractérisée en ce que le papier de protection pour la cuisson au four (1) est une section rectangulaire (25), de préférence en papier de protection pour la cuisson au four enduit sur ses deux faces, qui est plus longue et un peu plus large que la pâte (2), tandis que les parties (5) de la section de papier de protection pour la cuisson au four (25) qui dépassent de la pâte à l'une des ou aux deux extrémités longitudinales sont repliées par-dessus la ou les extrémités de la pâte (2), une ligne de perforations transversale pouvant être présente dans l'une des ou les deux parties (5).

28. Pâte suivant la revendication 27, caractérisée en ce qu'elle est enroulée conjointement avec la section de papier de protection pour la cuisson au four (25), sur elle-même sans l'aide d'un support ou sur un support cylindrique (9), qui est de préférence un cylindre en carton recouvert de matière plastique homologuée pour le contact direct avec des denrées alimentaires ou un cylindre en une matière plastique homologuée pour le contact direct avec des denrées alimentaires, de préférence en polyéthylène ou en polypropylène.

29. Pâte suivant la revendication 28, caractérisée en ce que le rouleau (3) est emballé d'une manière étanche à l'air et à la vapeur d'eau dans une enveloppe (14) en pellicule de matière plastique, de préférence en pellicule transparente, dans laquelle l'air est éventuellement remplacé par un gaz inerte, comme de l'azote et/ou du dioxyde de carbone.

30. Pâte suivant la revendication 29, caractérisée en ce que le rouleau (3) est emballé sous vide dans l'enveloppe (14).

31. Pâte suivant la revendication 16, caractérisée en ce qu'elle a la forme d'une bande rectangulaire présentant une largeur de 30 à 100 cm et une longueur de 100 à 600 cm, de préférence une largeur d'environ 40 cm et une longueur d'environ 430 cm.

11

FIG.1

FIG.2

FIG.3

0 158 590

FIG. 4

FIG. 5

FIG. 6

## FIG. 7

## FIG. 8